# EUROPÄISCHE PATENTSCHRIFT

(11) **EP 1 924 975 B1**
(45) Veröffentlichungstag und Bekanntmachung des Hinweises auf die Patenterteilung: **13.07.2016**
(21) Anmeldenummer: 06791738.5
(22) Anmeldetag: 30.08.2006
(51) Int. Cl.: G06K 19/08, G07D 7/12

(54) **VERFAHREN UND VORRICHTUNG ZUR ECHTHEITSPRÜFUNG VON BANKNOTEN**
METHOD AND DEVICE FOR CHECKING THE AUTHENTICITY OF BANKNOTES
PROCÉDÉ ET DISPOSITIF POUR VERIFIER L'AUTHENTICITÉ DE BILLETS DE BANQUE

(30) Priorität: 30.08.2005 DE 102005041054
(43) Veröffentlichungstag der Anmeldung: 28.05.2008
(73) Patentinhaber: Giesecke & Devrient GmbH, 81677 München (DE)
(72) Erfinder: SCHÜTZMANN, Jürgen, 85276 Pfaffenhofen (DE)
(86) Internationale Anmeldenummer: PCT/EP2006/008489
(87) Internationale Veröffentlichungsnummer: WO 2007/025740

(56) Entgegenhaltungen:
- EP-A1- 0 303 725
- EP-A2- 1 291 828
- EP-A2- 1 300 810
- WO-A-00/46742
- WO-A-02/070279
- WO-A-2004/102490
- DE-A1- 3 121 484
- DE-A1- 10 326 983

## Beschreibung

Die vorliegende Erfindung betrifft ein Verfahren zum Prüfen der Echtheit von Banknoten, sowie eine dazu geeignete Prüfvorrichtung.

Es ist inzwischen üblich, Banknoten mittels lumineszierender Substanzen gegen Fälschung zu schützen. Die lumineszierenden Substanzen können dem Banknotenpapier und/oder dem Banknotenaufdruck hinzugefügt sein. Häufig ist die lumineszierende Substanz auch in im Substratmaterial verteilten farbigen oder farblosen Fasern, sogenannten Melierfasern, enthalten.

Je nach Art der lumineszierenden Substanz - das können sowohl fluoreszierende als auch phosphoreszierende Substanzen sein - emittiert die Substanz in einem definierten Spektralbereich, wenn sie mittels Strahlung aus einem ebenfalls definierten Spektralbereich bestrahlt wird. Die Anregungsstrahlung kann dabei sowohl im sichtbaren als auch im nichtsichtbaren Spektralbereich liegen. Ebenso kann die emittierte Lumineszenzstrahlung im sichtbaren oder nicht-sichtbaren Spektralbereich liegen. Beide Strahlungen dürfen sich jedoch nicht überlappen, da ansonsten die Lumineszenzstrahlung von der Anregungsstrahlung jedenfalls im Falle fluoreszierender Substanzen nicht zu unterscheiden ist.

Derartige Echtheitsmerkmale wirken nicht nur als Kopierschutz, sondern waren zumindest in der Vergangenheit aufgrund der Komplexität der Lumineszenzstoffe nur schwer nachahmbar. Heutzutage sind jedoch auch Fälschungen im Umlauf, die solche Lumineszenzstoffe enthalten, sogar in Form von im Dokument verteilten Melierfasern. So gibt es US-Dollar-Fälschungen mit hoher Qualität, die Lumineszenzfasern enthalten, welche im selben Wellenlängenbereich zur Lumineszenz anregbar sind wie Original-US-Banknoten und auch im selben Wellenlängenbereich Lumineszenzstrahlung emittieren wie die Originalbanknoten. Die Anregung der in US-Banknoten der Emission aus dem Jahre 1996 enthaltenen roten Melierfasern und der in den US-Banknoten der Emission aus dem Jahre 2004 enthaltenen roten und blauen Melierfasern ist im relativ breitbandigen Bereich von zumindest 500 bis 640 nm möglich. Die emittierte Fluoreszenzstrahlung liegt dagegen grob geschätzt zwischen 600 nm und 700 nm. Es gibt somit einen Überlappungsbereich zwischen etwa 600 und 640 nm, das heißt, die Lumineszenz bei z.B. 620 nm erfolgt durch eine Anregung bei kürzeren Wellenlängen. Da auch die Fälschungen in den genannten Bereichen anregbar sind und emittieren, können Fälschungen nicht mehr ohne weiteres anhand dieses Echtheitsmerkmals von Originalen unterschieden werden. Entsprechendes gilt für die aktuellen russischen Rubelbanknoten, in denen dieselben oder ähnliche Fasern eingesetzt sind. Es ist möglich, dass bereits heute oder zukünftig weitere Währungen mit entsprechenden Fasern ausgerüstet werden.

Eine Alternative zur Lösung dieses Problems besteht darin, neue Lumineszenzstoffe zu entwickeln und einzusetzen, die ganz charakteristische Eigenschaften besitzen. So werden beispielsweise in den Druckschriften EP 0 066 854 A1, WO 99/38701 und WO 99/38703 besondere Lumineszenzstoffe mit speziellen Absorptions- und Emissionseigenschaften vorgeschlagen. Allerdings ist es kaum durchführbar, immer dann neue Lumineszenzstoffe in den Banknoten einzusetzen, wenn die bisher verwendeten Lumineszenzstoffe erfolgreich nachgeahmt werden. Vielmehr ist es aus ökonomischen Gründen sinnvoll, den Zeitraum bis zur nächsten Neuemission möglichst lange herauszuzögern.

In WO 00/46742 A1 sind Verfahren und eine Vorrichtung wenigstens zum Authentisieren und/oder Sortieren und(/oder Zählen von Dokumenten sowie Sicherheitsstrukturen, die in Dokumenten enthalten sind, und Dokumente, die Sicherheitsstrukturen enthalten, beschrieben. Eine Sicherheitseinrichtung oder Struktur enthält ein optisches Verstärkungsmedium und eine Struktur mit Grenzen, die der Struktur eine Gesamtgeometrie verleihen, das in Kombination mit mindestens einer Materialeigenschaft der Struktur eine Erhöhung der von dem Verstärkungsmedium abgegebenen elektromagnetischen Strahlung unterstützt, um, in einer Ausführungsform, die Erzeugung wenigstens einer Mode zu begünstigen, die eine Emission elektromagnetischer Strahlung innerhalb eines schmalen Wellenlängenbandes erhöht. Geeignete Formen für die Struktur umfassen langgestreckte, allgemein zylindrische Formen wie Filamente, eine Kugelform, eine Teilkugelform, eine Ringform, eine kubische und andere polyedrische Form und eine Scheibenform. Die Struktur enthält vorzugsweise mindestens eine aus einer monolithischen Struktur oder einer mehrschichtigen Struktur oder einer geordneten Struktur, die die verteilte Rückkopplung unterstützen kann. Die Sicherheitseinrichtung kann in Währung, einen Pass, einen Lottoschein, ein begebbares Wertpapier, eine Kredit- oder Debitkarte oder jegliches Substrat, für das es erwünscht ist, zu authentifizieren, zu zählen, kodieren, zu sortieren oder zu überprüfen, eingearbeitet werden.

DE 3121484 A1 beschreibt Wertpapiere mit lumineszierenden Echtheitskennzeichen, welche nach Anregung mit unsichtbarem Licht ausschließlich unsichtbares Licht anderer Wellenlängen als Echtheitssignal aussenden. Die Luminophore können den verwendeten Druckfarben beigefügt sein oder sie können dem Papierstoff bei der Papierstoffherstellung zugesetzt sein. Ein entsprechendes Prüfgerät ermöglicht es, die Echtheit des Wertpapiers in Gegenwart von Kunden, aber von diesen unbemerkt festzustellen; dabei wird die Unsichtbarkeit von Prüfsignal und Echtheitssignal ausgenutzt und die Prüfvorrichtung hinter einer für sichtbares Licht undurchlässigen Platte verborgen, welche aber für das Prüfsignal und für das Echtheitssignal durchlässig ist.

Aufgabe der vorliegenden Erfindung ist es daher, eine einfache Lösung zu dem Problem zu finden, dass die in Banknoten eingesetzten Lumineszenzstoffe früher oder später von Fälschern erfolgreich nachgeahmt werden und die Lumineszenzstoffe dadurch als Echtheitsmerkmal untauglich werden.

Diese Aufgabe wird erfindungsgemäß durch ein Verfahren mit den Merkmalen des Patentanspruchs 1 gelöst. In den davon abhängigen Ansprüchen sind vorteilhafte Ausgestaltungen und Weiterbildungen der Erfindung angegeben.

Die Erfindung basiert auf der Feststellung, dass die Lumineszenzstoffe der nachgeahmten Banknoten nicht exakt das Anregungs- und Emissionsverhalten aufweisen wie die in den Originalbanknoten verwendeten Lumineszenzstoffe. In Bezug auf die zuvor konkret diskutierten Melierfasern, wie sie beispielsweise in US-Banknoten eingesetzt werden, bedeutet dies, dass die derzeit auf dem Markt befindlichen Fälschungen keine Lumineszenzstrahlung emittieren, wenn sie mit Anregungsstrahlung aus dem beschränkten Wellelängenbereich von 600 bis 640 nm bestrahlt werden. Die Originalbanknoten dagegen werden bei einer solchen Anregungsstrahlung zur Emission von roter Lumineszenzstrahlung angeregt. Sofern also (zumindest auch) im Wellenlängenbereich von 640 bis 700 nm die Lumineszenzstrahlung detektiert wird, beispielsweise mittels des menschlichen Auges als Sichtprüfung, lassen sich Original und Fälschung zuverlässig voneinander unterscheiden. Die Echtheitsprüfung wird dann als positiv bewertet, wenn die Lumineszenzstrahlung rot erscheint. Wird die Lumineszenzstrahlung sensorisch detektiert, so wird diese Detektion vorzugsweise auf den konkreten Wellenlängenbereich von 640 bis 700 nm beschränkt.

Ähnliches gilt für Anregung im Wellenlängenbereich von 520-550 nm und der Detektion der Lumineszenzstrahlung bei 640 bis 700nm. Es ist auch eine Kombination der Anregungswellenlängen denkbar, so dass die Lumineszenzstrahlung bei 640 bis 700nm abwechselnd unter der Anregung in den Wellenlängenbereichen 520 bis 550 nm und 600 bis 640 nm detektiert wird.

In allen Fällen ist es vorteilhaft, beim Detektieren der Lumineszenzstrahlung die Anregungsstrahlung, die teilweise von der Banknote zum Detektor bzw. zum Betrachter reflektiert werden kann, mittels eines Langpassfilters auszufiltern. Der Langpassfilter sollte vorzugsweise bei einer Wellenlänge unter 610 nm eine Transmission von maximal 10 % und bei einer Wellenlänge über 630 nm eine Transmission von mindestens 50 % besitzen.

Eine entsprechende Prüfvorrichtung, die vorzugsweise als handliche, d.h. in der Hand haltbare, Vorrichtung zum flexiblen Gebrauch ausgebildet ist, umfasst demzufolge zumindest eine Anregungsstrahlungsquelle zum Aussenden von Strahlung aus dem beschränkten Wellenbereich von 600 bis 640 nm, um damit die Banknote zur Emission der Lumineszenzstrahlung anzuregen.

Des weiteren besitzt die Prüfvorrichtung vorteilhafter Weise den vorerwähnten Langpassfilter zum Ausblenden von Strahlung aus dem Anregungsstrahlungsbereich, wobei der Langpassfilter relativ zur Anregungsstrahlungsquelle derart angeordnet sein muss, dass von der Banknote emittierte Lumineszenzstrahlung durch den Langpassfilter detektierbar ist, entweder sensorisch oder mittels des menschlichen Auges.

Im Falle einer sensorischen Erfassung der emittierten Lumineszenzstrahlung besitzt die Prüfvorrichtung des Weiteren einen Detektor, der zumindest im Wellenlängenbereich von 640 bis 700 nm empfindlich ist. Vorzugsweise ist die Empfindlichkeit des Detektors auf diesen Wellenlängenbereich beschränkt.

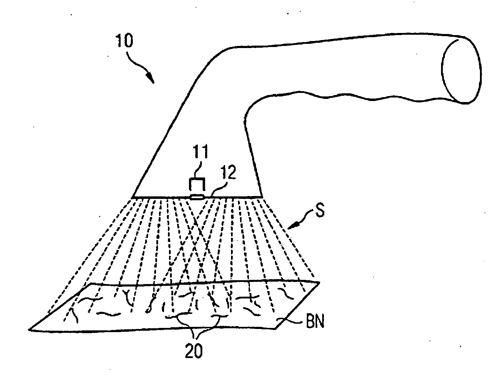

Nachfolgend wird die Erfindung beispielhaft anhand der Figur 1 erläutert.

Fig. 1 zeigt eine Prüfvorrichtung 10 zum Prüfen der Echtheit einer Banknote BN, die mit Melierfasern 20 ausgestattet ist, welche zur Emission von Lumineszenzstrahlung anregbare Stoffe enthält. Die Prüfvorrichtung 10 ist als Handgerät für den individuellen, flexiblen und ortsunabhängigen Einsatz ausgebildet. Sie kann beispielsweise batteriebetrieben sein, aber auch einen hier nicht dargestellten elektrischen Anschluss besitzen.

Mittels der Prüfvorrichtung wird die Banknote BN mit Lumineszenzstrahlung S aus dem gewünschten Wellenlängenbereich als Anregungsstrahlung (600 bis 640 nm) bestrahlt. Dazu kann beispielsweise ein HeNe-Laser oder Laserdioden (633 nm) eingesetzt werden. Es können auch entsprechende LEDs mit Emissionsmaximum bei 633 nm verwendet werden.

Ein Detektor 11 erfasst die von der Banknote ausgehende Strahlung. Wenn die Prüfung im Dunkeln durchgeführt wird, handelt es sich dabei im Wesentlichen um die Lumineszenzstrahlung der Melierfasern 20. Soweit die Anregungsstrahlung nicht von der Banknote BN absorbiert oder transmittiert wird, umfasst diese Strahlung aber auch reflektierte Anteile der Anregungsstrahlung S. Um diese Anregungsstrahlungsanteile auszublenden, ist im Strahlengang vor dem Detektor 11 ein Langpassfilter 12 vorgesehen, der Wellenlängen unter 610 nm zu maximal 10 % durchlässt und Wellenlängen über 630 nm zu mindestens 50 % durchlässt. Geeignet ist beispielsweise ein Filter der Firma Schott mit der Bezeichnung RG 630. Da der Detektor 11 im Wellenlängenbereich von 640 bis 700 nm hohe Empfindlichkeit besitzt, kann auf diese Weise die Lumineszenzstrahlung der Melierfasern 20 zuverlässig detektiert werden. Um längerwellige Strahlung >700nm zu unterdrücken können entsprechende Filter wie beispielsweise ein Filter der Firma Schott mit Bezeichnung BG 40 mit einer Transmission von <10 % für Wellenlängen größer als 720 nm. Die Melierfasern gefälschter Banknoten dagegen sind in dem genannten Anregungsspektrum nicht zur Lumineszenz im roten Spektralbereich anregbar.

Anstelle des Detektors 11 kann die Lumineszenzstrahlung selbstverständlich auch mit dem bloßen Auge detektiert werden. In diesem Falle ist der Langpassfilter 12 an einer entsprechenden Stelle derart anzuordnen, dass durch den Langpassfilter 12 hindurch die mit der Anregungsstrahlung S bestrahlte Banknote BN betrachtet werden kann.

## Patentansprüche

1. Verfahren zum Prüfen der Echtheit von Banknoten (BN), die mit zur Emission von Lumineszenzstrahlung anregbaren Stoffen als Echtheitsmerkmal ausgestattet sind, umfassend die Schritte:
- Anregen der Emission mittels Anregungsstrahlung aus dem beschränkten Wellenlängenbereich von 600 bis 640 nm oder 520 bis 550 nm und
- Detektieren der emittierten Lumineszenzstrahlung zumindest auch im Wellenlängenbereich von 640 bis 700 nm,
**dadurch gekennzeichnet, dass** beim Schritt des Detektierens der Lumineszenzstrahlung Anteile der Anregungsstrahlung mittels eines Langpassfilters (12) ausgeblendet werden, der vorzugsweise bei einer Wellenlänge von unter 610 nm eine Transmission von maximal 10 % und bei einer Wellenlänge über 630 nm eine Transmission von mindestens 50 % besitzt, und
dass die Emission in den Anregungsbereichen 600 bis 640 nm und 520 bis 550 nm abwechselnd stattfindet und die Lumineszenzstrahlung von 640 bis 700 nm detektiert wird.

2. Verfahren nach Anspruch 1, **dadurch gekennzeichnet, dass** es zum Prüfen von solchen Banknoten eingesetzt wird, bei denen die Stoffe ein breitbandiges Anregungsspektrum und/oder ein breitbandiges Emissionsspektrum besitzen.

3. Verfahren nach einem der Ansprüche 1 oder 2, **dadurch gekennzeichnet, dass** es zum Prüfen der Echtheit von US-Banknoten, insbesondere der Emission 1996 und/oder 2004, eingesetzt wird.

4. Verfahren nach einem der Ansprüche 1 oder 2, **dadurch gekennzeichnet, dass** es zum Prüfen der Echtheit von russischen Rubelbanknoten eingesetzt wird.

5. Verfahren nach einem der Ansprüche 1 bis 4, **gekennzeichnet durch** den Schritt des Bewertens der Echtheitsprüfung als positiv, wenn die Lumineszenzstrahlung rot erscheint.

## Claims

1. A method for checking the authenticity of bank notes (BN) which are equipped with substances excitable to emit luminescence radiation as an authenticity feature, comprising the steps of:
- exciting the emission by means of excitation radiation from the restricted wavelength range from 600 to 640 nm or 520 to 550 nm, and
- detecting the emitted luminescence radiation at least also in the wavelength range from 640 to 700 nm,
**characterized in that** in the step of detecting the luminescence radiation, fractions of the excitation radiation are blocked by means of a long-pass filter (12) which preferably has a transmission of at most 10% at a wavelength under 610 nm, and a transmission of at least 50% at a wavelength over 630 nm, and
that the emission is effected alternately in the excitation ranges from 600 to 640 nm and 520 to 550 nm, and the luminescence radiation is detected from 640 to 700 nm.

2. The method according to claim 1, **characterized in that** it is used for checking those bank notes in which the substances have a broadband excitation spectrum and/or a broadband emission spectrum.

3. The method according to either of claims 1 to 2, **characterized in that** it is used for checking the authenticity of US bank notes, in particular the issues of 1996 and/or 2004.

4. The method according to either of claims 1 to 2, **characterized in that** it is used for checking the authenticity of Russian ruble bank notes.

5. The method according to any of claims 1 to 4, **characterized by** the step of rating the authenticity check as positive when the luminescence radiation appears red.

## Revendications

1. Procédé de vérification de l'authenticité de billets de banque (BN) munis, en tant que caractéristique de sécurité, de substances susceptibles d'être excitées de manière à émettre un rayonnement luminescent, comprenant les étapes:
- excitation, au moyen de rayonnement d'excitation, induisant l'émission dans la gamme de longueurs d'ondes restreinte de 600 à 640 nm ou 520 à 550 nm, et
- détection, au moins aussi dans la gamme de de longueurs d'ondes de 640 à 700 nm, du rayonnement luminescent émis,
**caractérisé en ce que**, lors de l'étape de la détection du rayonnement luminescent, des parts du rayonnement d'excitation sont masquées au moyen d'un filtre passe-haut (12) qui, de préférence, présente à une longueur d'ondes de moins de 610 nm une transmission d'au maximum 10% et à une longueur d'ondes de plus de 630 nm une transmission d'au minimum 50% et
**en ce que** l'émission a lieu alternativement dans les zones d'excitation de 600 à 640 nm et de 520 à 550 nm et que le rayonnement luminescent est détecté entre 640 et 700 nm.

2. Procédé selon la revendication 1, **caractérisé en ce qu'**il est employé pour la vérification de billets de banque dont les substances présentent un spectre d'excitation à large bande et/ou un spectre d'émission à large bande.

3. Procédé selon une des revendications 1 ou 2, **caractérisé en ce qu'**il est employé pour la vérification de l'authenticité de billets de dollars US, en particulier de l'émission de 1996 et/ou de 2004.

4. Procédé selon une des revendications 1 ou 2, **caractérisé en ce qu'**il est employé pour la vérification de l'authenticité de billets de banque de roubles russes.

5. Procédé selon une des revendications de 1 à 4, **caractérisé par** l'étape de l'appréciation de la vérification d'authenticité en tant que positive si le rayonnement luminescent apparaît rouge.
